Europäisches Patentamt

European Patent Office

Office européen des brevets

(19)

(11) Publication number: **0 357 840**

**A1**

(12) # EUROPEAN PATENT APPLICATION

(21) Application number: 88201919.3

(22) Date of filing: 07.09.88

(51) Int. Cl.⁵ **F23L 9/04 , F23L 11/00**

Amended claims in accordance with Rule 86 (2)
EPC.

(43) Date of publication of application:
**14.03.90 Bulletin 90/11**

(84) Designated Contracting States:
**AT BE CH DE ES FR GB GR IT LI LU NL SE**

(71) Applicant: **"STELRAD IDEAL"**
**Blokhuisstraat 49**
**B-2800 Mechelen(BE)**

(72) Inventor: **The inventor has agreed to waive**
**his entitlement to designation**

(74) Representative: **Modrie, Guy et al**
**Cabinet Vigneron Avenue G. De Longueville,**
**22 Bte 7-14**
**B-1150 Bruxelles(BE)**

(54) **Pressurized combustion chamber boiler provided with an inlet for secondary air.**

(57) Boiler (1) having a pressurized combustion chamber which is provided with at least one gas outlet (4) for evacuation of the flue gas, said gas outlet issued forth in an inlet of a smoke box (6), secondary air being added to said flue gas. Said smoke box comprises at least one further inlet (7) for inputting said secondary air. Preferably said smoke box is provided with a venturi-nozzle (10).

Fig.2.

EP 0 357 840 A1

## Pressurized combustion chamber boiler provided with an inlet for secondary air.

The invention relates to a boiler device having a pressurized combustion chamber which is provided with at least one gas outlet for evacuation of the flue gas, said gas outlet issued forth in an inlet of a smoke box, secondary air being added to said flue gas.

Such a boiler is well known, for example from central heating installations. The flue gas originating from the burned oil or gas is conducted towards a gas outlet of the combustion chamber which issued forth in a smokebox, an output of which being connected via a flue gas pipe to a chimney. In order to reduce the dew point, secondary air is added to the flue gas which will reduce the watervapor concentration in the flue gas. The dilution of the flue gas is easily monitored for example by measuring of the $CO_2$ percentage in the flue gas. The dilution of the flue gas will decrease the dew point of the flue gas and therefore lower the temperature at which condensation of the flue gas occurs, thus avoiding condensation of the flue gas in the chimney, and thus deterioration of the chimney due to condensation. In the known solution a draught stabiliser is mounted in the upperpart of the chimney or in the flue gas pipe in order to add secondary air to the flue gases.

A drawback of the known solution is that one has to do some construction work on the chimney or on the flue gas pipe leading to the chimney, in order to mount such a draught stabiliser. Such a construction work is cumbersome and expensive because it requires a transformation of the chimney or of the flue gas pipe. Further it is left to the responsability of the person who installs the boiler to decide whether or not it is necessary to provide the chimney or the flue gas pipe with a draught stabiliser. If that person is not diligent, there is a risk of damages to the chimney.

It is an object of the invention to provide a boiler device having a pressurized combustion chamber and of which the concentration of the watervapor in the flue gas is reduced so that the flue gas condensation in the chimney is solved without the need of transformation of the chimney or the flue gas pipe.

The object of the invention is realised in that a boiler device according to the invention is characterized in that said smoke box comprises at least one further inlet for inputting said secondary air. The secondary air which is inputted via said further inlet is mixed with the flue gas present in the smoke box, which causes a dilution of the flue gas and thus a reduction of the watervapor concentration in the flue gas. The fact that the smoke box is provided with a further inlet, implies that it is no longer necessary to transform the chimney. Also since the smoke box is a part of the boiler device, it is the boiler device itself which is now provided with such a further inlet, which implies that it is no longer the responsability of the person who installs the boiler to devide whether or not it is necessary to provide the chimney or the flue gas pipe with a draught stabiliser. The risks of damages to the chimney is therefore substantially reduced, since there is now always a reduction of the watervapor in the flue gas, due to the presence of the further inlet.

It has to be mentioned that it is known to apply a secondary air inlet in the flue gas pipe between the boiler and the chimney. The article "stabilisateur de tirage combiné KNL" published by Viessmann - Belgium S.P.R.L. describes the installation of a draught stabiliser in the flue gas pipe. The difference between the present invention and device described in said article is that in the present invention the further inlet is incorporated in the smoke box and not in the flue gas pipe. Installation of a draught stabiliser in the flue gas pipe is again left to the responsability of the person who installs the boiler, again posing the problems as already set out hereabove.

The gist of the present invention is essentially situated in the insight that mounting a draught stabiliser either in the chimney or in the flue gas pipe causes a problem. If the person who installs the boiler is not diligent (for price reasons or other) damages to the chimney can occur. If on the other hand, as it is the case in the present invention, the boiler device is equipped with an inlet for secondary air, installation costs are reduced on the one hand, and on the other hand the risks of damages are eliminated, since the risks of a non-diligent person who installs the boiler is eliminated.

A preferred embodiment of a boiler device according to the invention is characterized in that said smoke box is provided with a venturi-nozzle, said further inlet being provided for conducting said secondary air towards an exhaust of said venturi-nozzle. A venturi-nozzle provides a surface difference between the in- and output for the flue gas in the smoke box. The surface difference between in-and output of the smoke box creates a static pressure decrease of the flue gas which on its turn causes a suction of secondary air through said further inlet. The dew point of the thus obtained gas muxture is much lower than the one of the flue gas so that no condensation will occur in the chimney.

Preferably, a valve for controlling the amount of secondary air added to said flue gas is mounted in said further inlet. Thanks to the presence of the valve control of the amount of secondary air inletted into the smoke box is now possible.

In a further preferred embodiment of a boiler device according to the invention said valve is a draught sabiliser. In case that an abnormal pressure build up in the chimney would prevent a normal flue gas throughput, the draught stabiliser will close, thus preventing a possible flue gas leak into the boiler room.

Further details of the invention will now be given by means of an example showed in the drawing. It will be clear that the invention is not limited to the given example and that several modifications within the scope of the invention are possible.

In the drawings :

Figure 1 shows a cross-section of a first embodiment of a boiler device according to the invention.

Figure 2 shows a cross-section of a second embodiment of a boiler device according to the invention.

In the figures, the same reference numbers indicate analogous elements.

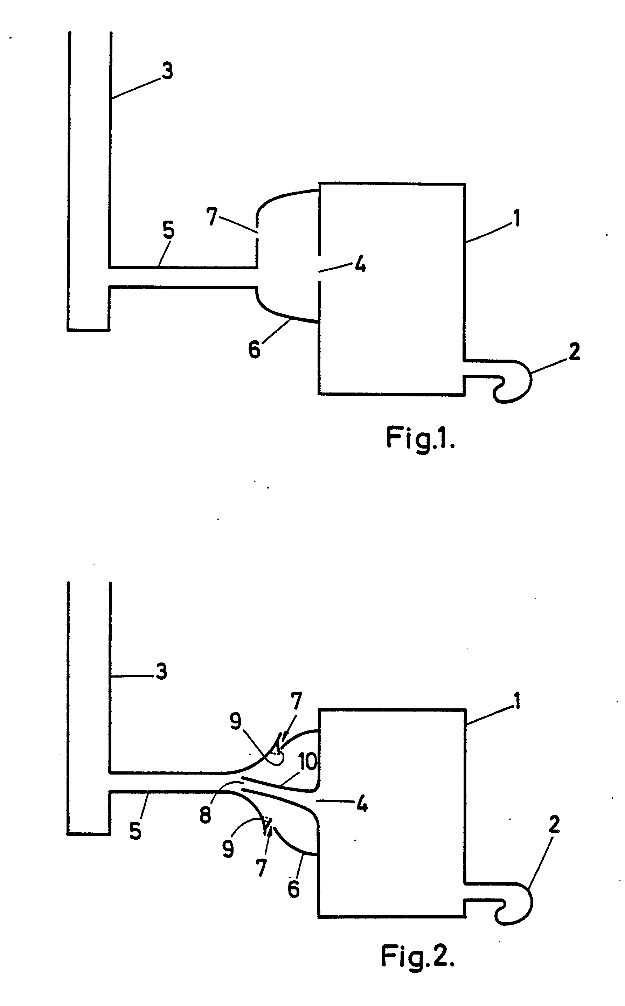

The boiler device illustrated in figure 1 comprises a boiler body 1 on which a burner 2 is connected. The flue gas originating from the burned fuel (oil or gas) is conducted towards an outlet 4 of the boiler body which issued forth in an inlet of a smoke box 6, connected to the boiler body 1. The smoke box 6 is connected to a flue gas pipe 5 which leads to the chimney 3.

The boiler is of the type having a pressurized combustion chamber, which signifies that an overpressure is maintained in the combustion chamber, and that the flue gases are outputted at an overpressure.

The smoke box is provided with a further inlet 7 for inputting secondary air. That secondary air is mixed with the flue gas present in the smoke box 6 and thus dilutes the flue gas. The gas mixture composed by the flue gas and the secondary air has a lower watervapor concentration than the one of the flue gas only. The diluted flue gas also has a lower dew point than the one of the non-diluted flue gas and thus a lower temperature at which condensation occurs. Thanks to the mixture of the secondary air the water vapor concentration is reduced and no condensation will occur in the chimney.

Since the further inlet 7 for the secondary air is now provided in the smoke box there is no need to tranform either the chimney 3 nor the flue gas pipe 5, in order to provide an inlet for secondary air. The boiler device is now always equipped with a secondary air inlet, so that damages which could be caused to the chimney, due to a too high water vapor concentration in the flue gas, are automatically eliminated. There is now a continuous ventilation of the chimney which keeps the chimney dry.

In the boiler device illustrated in figure 2 the smoke box 6 is provided with a venturi-nozzle 10. Details of the operation of a venturi-nozzle are described on pages 259-262 of the "ASHRAE Handbook of fundamentals" (Edition 1988) published by the "American Society of Heating, Refrigerating and Airconditioning Engineers, Inc" 345 East 47th Street, New York, N.Y. 10017.

The exhaust surface 8 of the venturi nozzle 10 is smaller than the exhaust surface of the outlet 4 of the combustion chamber. Since the throughput at 4 must be equal to the throughput at 8 there will be a decrease of the static pressure and an increase of the dynamic pressure at the exhaust 8, with respect to the exhaust 4.

The decrease of the static pressure at 8 causes a pressure difference between the atmospheric pressure and the pressure at the outlet 8 of the smoke box, which pressure difference enables secondary air inputted via the further inlet 7 of the smoke box 6 to be sucked. The fact that secondary air is now sucked due to the presence of a venturi-nozzle, provides an improved input of secondary and thus a better dilution of the flue gas. The amount of sucked secondary air is now essentially determined by the pressure difference at the outlet 8, which implies that said amount is no longer fully determined by the underpressure present in the bottom of the chimney. So even if the chimney is somewhat obstructed, for example by the nest of a bird, there will always be enough secondary air sucked when the smoke box is provided with a venturi-nozzle.

Since the boiler has a pressurized combustion chamber, the flue gas has an overpressure at the exhaust 4. This pressure will be used to accelerate the flue gas in the venturi restriction and create a static pressure difference with the atmospheric pressure that will be the cause of the secondary air add on.

However, sometimes a problem can occur when the resistance of the chimney is too high, for example in the case of a mechanical obstruction in the chimney or when the chimney is not well designed. If the chimney resistance is too high, the pressure build up will be so that throughput of the flue gas will be hindered. The flue gas could now seek any other possible outlet and could now escape through those inlets and come into the room where the boiler is located. In order to prevent returned exhaust gases to come into the boiler room, the further inlet 7 is provided with a valve 9, preferably a draught stabiliser, which controls the input of secondary air into the smoke box. In case that an abnormal pressure build up in the chimney would present normal flue gas throughput, the draught stabilizer will close, thus preventing a possible flue gas leak into the room where the boiler device is installed.

## Claims

1. A boiler device having a pressurized combustion chamber which is provided with at least one gas outlet for evacuation of the flue gas, said gas outlet issued forth in an inlet of a smoke box (6), secondary air being added to said flue gas, characterized in that, said smoke box comprises at least one further inlet (7) for inputting said secondary air.

2. A boiler device as claimed in claim 1, charactrized in that, said smoke box is provided with a venturi-nozzle (10), said further inlet being provided for conducting said secondary air towards an exhaust of said venturi-nozzle.

3. A boiler device as claimed in claim 1 or 2, characterized in that, a valve for controlling the amount of secondary air added to said flue gas is mounted in said further inlet.

4. A boiler device as claimed in claim 3, characterized in that said valve is a draught stabiliser (9).

Amended claims in accordance with Rule 86(2) EPC.

1. A boiler device having a pressurized combustion chamber which is provided with at least one gas outlet for the evacuation of the flue gas, said gas outlet issues forth in an outlet unit (6) which is provided with an inlet (7) for inputting secondary air to be added to said flue gas and a further outlet for connection with a flue gas pipe, characterized in that, said outlet unit is provided with a venturi-nozzle (10) connected to said gas outlet, said inlet being provided for conducting said secondary air towards an exhaust of said venturi-nozzle.

2. A boiler device as claimed in claim 1, characterized in that, said outlet unit comprises an air box comprising said further outlet and wherein said venturi-nozzle issues forth in the neighbourhood of said further outlet.

3. A boiler device as claimed in claim 1 or 2, characterized in that, a valve for controlling the amount of secondary air added to said flue gas is mounted in said inlet.

4. A boiler device as claimed in claim 3, characterized in that said valve is a draught stabiliser (9).

5. An air box to be used in the boiler device as claimed in anyone of the claims 1-4, characterized in that said air box is provided with an input for inputting secondary air, a valve being mounted into said inlet.

Fig.1.

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 180 058 (ECONOSTO) <br> * Page 1, lines 30-38,63-87; figures 1,4 * | 1,2 | F 23 L 9/04 <br> F 23 L 11/00 |
| X | FR-A-1 281 277 (FREMION) <br> * Page 1, left-hand column, lines 22-33; page 1, right-hand column, lines 14-36; figures 1,2 * | 1,2 | |
| X | DE-U-8 703 895 (VIESSMANN) <br> * Page 3, last paragraph; page 4, first paragraph, lines 10-19; page 6, last paragraph; page 7, lines 1-6; figures 1,2 * | 1,3 | |
| Y | | 4 | |
| Y | US-A-2 054 682 (NOSS) <br> * Page 2, right-hand column, lines 4-11; figures 1,3 * | 4 | |
| A | US-A-2 699 819 (GRUBB) <br> * Column 3, lines 42-52; column 4, lines 25-34; figure 1 * | 1,3,4 | TECHNICAL FIELDS SEARCHED (Int. Cl.4) |
| A | DE-A-3 116 992 (BUDERUS) | | F 23 L <br> F 23 J <br> F 24 H |
| A | US-A-2 942 688 (JUMPER) | | |
| A | DE-A-3 345 202 (SCHMIDT) | | |

The present search report has been drawn up for all claims

| Place of search | Date of completion of the search | Examiner |
|---|---|---|
| THE HAGUE | 27-04-1989 | PHOA Y.E. |